# EUROPEAN PATENT APPLICATION

(11) **EP 4 197 352 A1**
(43) Date of publication of application: **21.06.2023**
(21) Application number: 22812404.6
(22) Date of filing: 28.10.2022
(51) Int. Cl.: A24F 13/06, A24F 13/14, B01D 46/00

(54) **SIDE STREAM SMOKE REMOVAL APPARATUS INCLUDING PLASMA ION FILTER**

(30) Priority: 02.11.2021 KR 20210148383
(71) Applicant: KT & G Corporation, Daejeon 34337 (KR)
(72) Inventor: The designation of the inventor has not yet been filed
(74) Representative: Ter Meer Steinmeister & Partner
(86) International application number: PCT/KR2022/016675
(87) International publication number: WO 2023/080558

(57) **Abstract**

A sidestream smoke removing device includes a housing having a smoking space defined therein, an article inserting part positioned on one end of the housing and having an open area through which a smoking article is inserted into the smoking space, and a sidestream smoke processing part positioned at a distance from an upstream end of the smoking article inserted into the smoking space and configured to process sidestream smoke produced from the smoking article. The sidestream smoke processing part includes a plasma ion filter configured to generate plasma ions using a high voltage electrode and a ventilation fan configured to allow the sidestream smoke to be discharged through the plasma ion filter. The sidestream smoke removing device obtains superior effects in terms of a sidestream smoke removal rate and deodorizing performance without significantly reducing the flow rate after the application of the filter.

## Description

### Technical Field

The present disclosure relates to a sidestream smoke removing device including a plasma ion filter. More specifically, the present disclosure relates to a sidestream smoke removing device including a plasma ion filter configured to generate plasma ions using a high voltage electrode.

This application claims priority from and the benefit of Korean Patent Application No. 10-2021-0148383, filed on November 2, 2021, which is hereby incorporated by reference for all purposes as if set forth herein.

### Background Art

Cigarette smoke produced by smoking may be classified as main stream smoke delivered to the mouth through a cigarette filter and sidestream smoke discharged into the air without passing through the filter.

A sidestream smoke removing device is a type of smoking accessory devised to, for example, reduce cigarette smell from hands, remove (or purify) sidestream smoke, and the like. The sidestream smoke removing device typically has defined therein an enclosed smoking space and a sidestream smoke removing means. A user may smoke by inserting a cigarette into the smoking space inside the sidestream smoke removing device.

In order to improve the functionality of the sidestream smoke removing device, a filter capable of effectively removing a large amount of sidestream smoke produced during smoking is necessary. In particular, the sidestream smoke removing device requires a filter having superior deodorizing performance for a large amount of sidestream smoke while not having a large size. In this regard, the inventor has completed the present invention by continuously researching such a filter.

### Citation List

### Patent Literature

Patent Literature 1: United States Patent Application Publication No. 2019/0307165

### DISCLOSURE

### Technical Problem

An objective of the present disclosure is to propose a sidestream smoke removing device including a filter capable of effectively removing sidestream smoke.

### Technical Solution

According to a first aspect of the present disclosure, provided is a sidestream smoke removing device including: a housing having a smoking space defined therein; an article inserting part positioned on one end of the housing and having an open area through which a smoking article is inserted into the smoking space; and a sidestream smoke processing part positioned at a distance from an upstream end of the smoking article inserted into the smoking space and configured to process sidestream smoke produced from the smoking article.

In an embodiment of the present disclosure, the sidestream smoke processing part may include: a plasma ion filter configured to generate plasma ions using a high voltage electrode; and a ventilation fan configured to allow the sidestream smoke to be discharged through the plasma ion filter.

In an embodiment of the present disclosure, the electrode may protrude 1 mm to 10 mm with respect to a top surface of the plasma ion filter.

In an embodiment of the present disclosure, the plasma ion filter may include the two electrodes. The electrodes may be spaced apart from each other 25 mm or longer.

In an embodiment of the present disclosure, the electrode may be spaced apart 50 mm or longer from a downstream end of the sidestream smoke removing device.

In an embodiment of the present disclosure, the electrode may protrude and may have a pointed end.

In an embodiment of the present disclosure, the electrode may have a single column and the one or more ends provided on circumferential portions of the column.

In an embodiment of the present disclosure, the protruding portion of the electrode may have a needle shape or a brush shape.

In an embodiment of the present disclosure, the plasma ion filter may include: a circuit configured to apply a voltage to the electrode; and a plate configured to protect a top surface of the circuit. The electrode may be connected to the circuit and protrudes by extending through a hole of the plate.

In an embodiment of the present disclosure, the plate may have a flow path in a top portion thereof, the flow path allowing the sidestream smoke to pass therethrough.

In an embodiment of the present disclosure, the circuit may apply a voltage of 3 V to 5 V to the electrode.

In an embodiment of the present disclosure, a voltage on a protruding end of the electrode may be boosted to between 5,000V to 7,000V.

### Advantageous Effects

The sidestream smoke removing device according to an embodiment of the present disclosure uses the plasma ion filter as a filter. It is possible to obtain superior effects in terms of a sidestream smoke removal rate and deodorizing performance without significantly reducing the flow rate after the application of the filter.

### Brief Description of Drawings

FIG. 1 is a schematic diagram illustrating a sidestream smoke removing device to which a smoking article is applied according to an embodiment of the present disclosure.
FIG. 2 is a schematic diagram illustrating a configuration of a plasma ion filter according to an embodiment of the present disclosure.
FIG. 3 is a schematic diagram illustrating the configuration of the plasma ion filter according to an embodiment of the present disclosure.
FIG. 4 is a schematic diagram illustrating the configuration of the plasma ion filter according to an embodiment of the present disclosure.
FIG. 5 is a diagram schematically illustrating a needle-shaped electrode according to an embodiment of the present disclosure.
FIG. 6 is a diagram schematically illustrating a brush-shaped electrode according to an embodiment of the present disclosure.

### Best Mode

Hereinafter, embodiments will be described in detail with reference to the illustrative drawings. It should be understood that the same reference numerals will be used to refer to the same or like components throughout the drawings. In the description of embodiments, detailed descriptions of components or functions will be omitted when it is determined that the description may render the subject matter in some embodiments of the present disclosure rather unclear.

In addition, terms, such as "first", "second", "A", "B", "(a)", and "(b)" may be used herein to describe components of the present disclosure. Each of these terms is not used to define the essence, order, sequence, or number of components, etc., but is used merely to distinguish the corresponding component from other components. When it is mentioned that a component "is connected, coupled, or joined to" another component, it should be interpreted that, not only can the component "be connected, coupled, or joined to" the other component, but the component and the other component can also "be connected, coupled, or joined to" to each other via a further component.

When a first component is included in a first embodiment and a second component having the same function as that of the first component is included in a second embodiment, the second component may be described using the same name as the first component. Unless stated to the contrary, a description of one embodiment may be applied to other embodiments, and a specific description of an overlapping range will be omitted.

Herein, the term "smoking article" may refer to any product that may be smoked or any product that may simulate smoking, irrespective of being based on tobacco, tobacco derivatives, expanded tobacco, reconstituted tobacco, or tobacco substitutes. For example, the smoking article may include a product that may be smoked, such as cigarette, cigar, or cigarillo.

Herein, the term "smoking material" may refer to a material that generates smoke and/or aerosols or is used in smoking. For example, the smoking material may include a tobacco material. The tobacco material may include, for example, tobacco leaf fragments, tobacco plant stems, or materials processed from at least one thereof. According to an embodiment of the present disclosure, the tobacco material may include ground tobacco leaves, ground reconstituted tobacco, expanded shredded tobacco, expanded tobacco midribs, reconstituted tobacco leaves, and the like, but is not limited thereto.

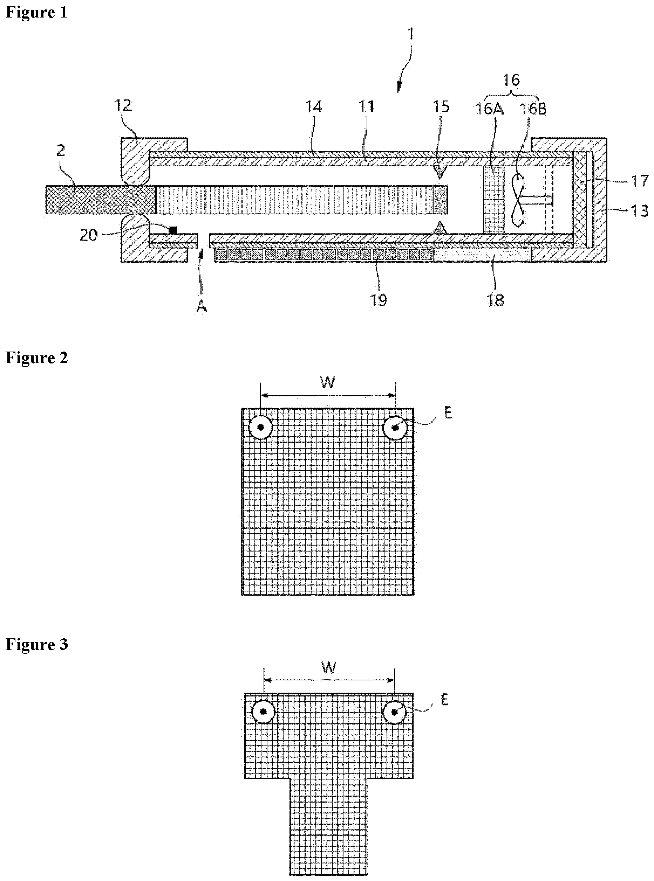

Herein, the term "upstream" or "upstream direction" may refer to a direction away from the oral region of a smoker, and the term "downstream" or "downstream direction" may refer to a direction toward the oral region of the smoker. The terms "upstream" and "downstream" may be used to describe relative positions of components of a smoking article. For example, in a smoking article 2 illustrated in FIG. 1, a filter part is disposed downstream or in a downstream direction of a smoking material part, and the smoking material part is disposed upstream or in an upstream direction of the filter part.

Herein, the term "longitudinal direction" may refer to a direction matching the longitudinal axis of the smoking article or the sidestream smoke removing device, and the term "perpendicular direction" refers to a direction perpendicular to the longitudinal axis of the smoking article or the sidestream smoke removing device.

Herein, the term "puff" refers to an inhalation of a user. The inhalation refers to an instance of inhaling air or smoke into the oral cavity, the nasal cavity, or the lungs of the user through the mouth or the nose of the user.

Hereinafter, a variety of embodiments of the present will be described in detail with reference to the accompanying drawings.

The present disclosure relates to a sidestream smoke removing device, and is intended to provide a sidestream smoke removing device including a filter capable of effectively collecting sidestream smoke produced during smoking. Herein, FIG. 1 schematically illustrating an example sidestream smoke removing device is provided for a better understanding of the sidestream smoke removing device. According to an embodiment of the present disclosure, the sidestream smoke removing device 1 includes a housing 11, an article inserting part 12, and a sidestream smoke processing part 16. The sidestream smoke removing device 1 may further include a back cover 13, a heat insulating part 14, an ignition part 15, a mesh part 17, a control part 18, a display part 19, and a temperature sensor 20. In addition to these components, universal components commonly known to those skilled in the art to which the present disclosure pertains may be further included. For example, the sidestream smoke removing device 1 may further include a battery (not shown) to provide power to electrical components (e.g., the control part 18, the display part 19, etc.). In addition, some of the components illustrated in FIG. 1 may not be essential components of the sidestream smoke removing device 1. That is, the sidestream smoke removing device 1 may be configured such that some of the illustrated components are omitted. For example, the sidestream smoke removing device 1 may be configured such that some components, such as the temperature sensor 20 and the display part 19, are omitted. Hereinafter, respective components of the sidestream smoke removing device 1 will be described.

The housing 11 may define a smoking space within the sidestream smoke removing device 1, and define at least a portion of the exterior of the sidestream smoke removing device 1. Although the housing 11 is illustrated as designating a sidewall of the sidestream smoke removing device 1 in FIG. 11, the housing 11 may designate the entirety of an exterior-forming structure including the article inserting part 12, the back cover 13, and the heat insulating part 14. The housing 11 may be formed of a strong material in order to provide the durability of the sidestream smoke removing device 1 and reduce the possibility of damage to the sidestream smoke removing device 1.

According to an embodiment of the present disclosure, the housing 11 may have a vent hole A through which air may smoothly enter the smoking space. The vent hole A may promote combustion of the smoking article 2 by allowing air to enter during smoking, whereby smoking performance of the sidestream smoke removing device 1 may be significantly improved. Although FIG. 1 illustrates a single vent hole A formed in the housing 11 as an example, a plurality of vent holes A may be provided. In addition, the positions, sizes, distances, and the like of the vent holes A may be variously designed. Whether the vent hole A is opened or closed and/or the degree of opening/closing of the vent hole A may be controlled by the control part 18.

The article inserting part 12 may be located on one end (e.g., a downstream side) of the housing 11, and have an open area through which the smoking article 2 is to be inserted. A user may insert the smoking article 2 into the smoking space in the sidestream smoke removing device 1 through the article inserting part 12. In order to block heat from dissipating from inside the smoking space, the article inserting part 12 may be formed of a heat insulating material. In addition, in order to prevent the inserted smoking article 2 from shaking, the article inserting part 12 may have a holder structure capable of holding the smoking article 2.

According to an embodiment of the present disclosure, the article inserting part 12 may have a size-adjustable structure. For example, the article inserting part 12 may have a structure by which the open area may be reduced or loosely expanded by a manual operation. In another example, the article inserting part 12 may be configured to automatically reduce the open area to be compliant with the smoking article 2. In a more specific example, the article inserting part 12 may be controlled by the control part 18. When the control part 18 detects the smoking article 2 being inserted using a sensor or a user input (e.g., performed by pushing a button) is received, the control part 18 may control the article inserting part 12 to reduce the open area. According to an embodiment of the present disclosure, as the size of the open area is adjusted to be compliant with the smoking article 2, shaking of the smoking article 2 may be prevented and support stability of the smoking article 2 may be improved. Furthermore, a variety of sizes of smoking articles 2 may be inserted into the sidestream smoke removing device 1, and thus the usability of the sidestream smoke removing device 1 may be improved.

The smoking article 2 may include a filter portion located upstream and a smoking material portion in contact with an upstream end of the filter portion. Here, the specific structure of the smoking article 2 may be variously changed. The filter portion may include a filter material capable of filtering smoke, and the smoking material portion may include a smoking material. An example of the smoking article 2 may be, but is not limited to, a combustion type cigarette. The smoking article 2 may include any article that produces sidestream smoke during smoking.

The sidestream smoke processing part 16 is positioned at a distance from the upstream end of the smoking article 2 inserted into the smoking space, and may perform a variety of processing functions regarding sidestream smoke produced from the smoking article. For example, the sidestream smoke processing part 16 may be positioned between the inserted smoking article 2 and the back cover 13 to purify the sidestream smoke. In addition, the sidestream smoke processing part 16 may perform a ventilation function to facilitate discharge of the purified sidestream smoke. Here, the specific structure and the operating system of the sidestream smoke processing part 16 may be variously designed, and may vary according to the embodiment.

According to an embodiment of the present disclosure, as illustrated in FIG. 1, the sidestream smoke processing part 16 may include a filter 16A and a ventilation fan 16B. The filter 16A may perform a sidestream smoke purification function by filtering sidestream smoke, whereas the ventilation fan 16B may perform a sidestream smoke discharge function. For example, the ventilation fan 16B may be rotated to draw sidestream smoke toward the filter 16A and to allow sidestream smoke that has passed through the filter 16A to be properly discharged. The operation of the ventilation fan 16B may be controlled by the control part 18.

The filter 16A may include a plasma ion filter. Here, the term "plasma ion filter" refers to a filter having a function of generating plasma ions and removing sidestream smoke or the like, for example, which may be produced from smoking, using plasma ions. According to an embodiment of the present disclosure, the plasma ion filter destructs surrounding gas components, such as moisture (H₂0), using electrical energy generated by boosting a voltage applied to an electrode into a high voltage, thereby generating plasma ions having a free radical. Such plasma ions serve to remove sidestream smoke that may be produced during smoking. In the present disclosure, the plasma ion filter is not specifically limited as long as the filter may realize a desired function using plasma ions.

The electrode may be positioned to protrude with respect to the top surface of the plasma filter providing a large amount of energy capable of generating plasma ions. This structure is advantageous to boost a voltage applied to distal ends of the protruding electrode. According to an embodiment of the present disclosure, the electrode protrudes 1 mm to 10 mm, particularly, 2 mm to 9 mm, and more particularly, 3 mm to 8 mm with respect to the top surface of the plasma ion filter. The degree of protrusion of the electrode in this range may not only be advantageous for boosting the voltage, but also generate plasma ions capable to covering the entirety of a flow path of the gas including the sidestream smoke and the like.

The plasma ion filter may include one or more electrodes E. When two or more electrodes E are included, the electrodes E may be disposed to be spaced apart from each other, since the interference between the electrodes may degrade the function of generating plasma ions. According to an embodiment of the present disclosure, the plasma ion filter includes two electrodes E, which may be spaced apart from each other at a distance of 25 mm or longer, 26 mm or longer, 27 mm or longer, 28 mm or longer, 29 mm or longer, or 30 mm or longer. The distance W between the electrodes E is measured with respect to the centers of the electrodes, and is designated with W in FIGS. 2 to 4. At a distance smaller than this range, it is difficult for the electrodes to be boosted to a high voltage, and thus it may not be easy to generate plasma ions.

Since plasma ions generated by the high voltage electrode contains a highly reactive free radical, the electrode may be positioned at a predetermined distance from the mouth of the user. According to an embodiment of the present disclosure, the electrode may be positioned to be spaced apart 50 mm or more, 52 mm or more, 54 mm or more, 56 mm or more, 58 mm or more, or 60 mm or more from the downstream end of the sidestream smoke removing device. Here, the distance is determined with respect to the downstream end of the sidestream smoke removing device in order to a sufficient distance between the mouth of the user and the electrode. That is, because the user smokes with his/her lips positioned on the smoking article even in the case in which the smoking article is inserted into the sidestream smoke removing device, the mouth of the user is at the same position as or positioned further downstream than the downstream end of the sidestream smoke removing device. In this manner, a sufficient distance between the mouth of the user and the electrode may be obtained. Since plasma ions are highly reactive, most reactions are fast at positions adjacent to the high voltage electrode, and created materials are also highly adhesive. Thus, the distance in the above-described range may be sufficient.

The plasma ion filter includes a circuit for applying a voltage to the electrode and a plate provided above the circuit to protect the circuit. The electrode is connected to the circuit, and protrudes by extending through a hole of the plate. In FIGS. 2 to 4, circles surrounding the electrodes E indicate such holes. The flow path through which the sidestream smoke passes may be provided above the plate. In other filters, when smoke passes through a filter part, the flow rate may be significantly reduced since the flow path is narrowed to obtain the function of the filter. In contrast, even when the flow path is substantially fully opened, the plasma ion filter may maintain high functionality as a filter using highly reactive plasma ions.

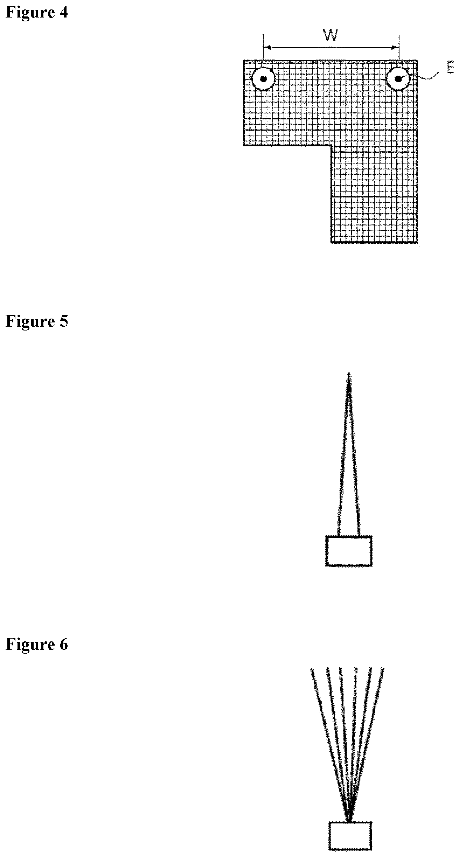

The plasma ion filter according to an embodiment of the present disclosure may be fabricated in a variety of shapes. The plasma ion filter may be configured such that the electrodes are basically positioned upstream of the filter, and the structure of the filter may vary depending on the placement of the electrodes. Considering the possibility of the filter, the electrodes may be preferably disposed on two upstream edges. Here, it is required to maintain a predetermined distance between the two electrodes as described above, and a structural change may be made in this consideration. According to an embodiment of the present disclosure, the plasma ion filter may have the shapes illustrated in FIGS. 2 to 4. As illustrated in FIG. 2, the filter may be configured such that the width of the downstream side may be maintained the same as the width of the upstream side. As illustrated in FIGS. 3 and 4, the filter may be configured such that the width of the downstream side may be smaller in consideration of the thickness of the smoking article.

According to an embodiment of the present disclosure, the electrode is configured such that the protruding end of each of the electrodes has a pointed shape. Since the end of the electrode has a pointed shape, a high voltage is concentrated at the end of the electrode. The protruding electrode may have a single column and one or more ends provided on circumferential portions of the column. When the electrode has one or more ends, the specific surface area of the electrode exposed to the flow path may be increased. Accordingly, this structure may be more advantageous to generate plasma ions. According to an embodiment of the present disclosure, the protruding portion of the electrode has a needle shape or a brush shape. The needle shape may be the same as in FIG. 5 as an example, and the brush shape may be the same as in FIG. 6 as an example.

According to an embodiment of the present disclosure, the circuit applies a voltage from 3 V to 5 V, particularly, 3.5 V to 5 V, and more particularly, 4 V to 5 V to the electrodes. At the end of the protruding electrode, the voltage applied in this manner may be boosted to a voltage from 5,000 V to 7,000 V. The electrode boosted to a high voltage may meet gas flowing through the gas flow path to generate plasma ions having a highly-reactive free radical.

The back cover 13 is positioned on the other end (e.g., the upstream end) of the housing 11, and may serve as a cover for the sidestream smoke removing device 1. The back cover 13 may have gas discharge passages through which the sidestream smoke processed (purified) through the sidestream smoke processing part 16 may be discharged. For example, the back cover 13 may be provided with gas discharge passages, such as fine holes.

The heat insulating part 14 may be formed of a low heat conductivity material to block heat from being discharged from inside the smoking space. Since the heat insulating part 14 is disposed on the outer surface of the housing 11, the heat insulating part 14 may prevent a risk of burn due to internal heat of the sidestream smoke removing device 1 when a body portion of the user is in contact with the sidestream smoke removing device 1 (e.g., when the user holds the sidestream smoke removing device 1 to smoke).

The temperature sensor 20 may be disposed within the smoking space to measure the temperature of the smoking article 30 inserted into the smoking space. The number, shape, disposed position, disposed distances, and the like of the temperature sensor 20 may be variously designed and may differ depending on the embodiment.

According to an embodiment of the present disclosure, as illustrated in FIG. 1, the temperature sensor 20 may be disposed to measure a temperature near the downstream end of the smoking material part. In this case, whether or not smoking is finished may be accurately determined only using the temperature sensor 20 without an additional monitoring module. This may be understood considering that smoking is generally finished when the combustion of the smoking material is completed. For example, when the temperature measured by the temperature sensor 20 is equal to or higher than a reference temperature (e.g., a smoking position has currently reached the downstream end of the smoking material) or when the temperature measured by the temperature sensor 20 is reduced to be equal to or lower than the reference temperature after having increased (e.g., combustion heat is reduced at the downstream end of the smoking material), the control part 18 may determine that smoking is finished.

According to an embodiment of the present disclosure, a plurality of temperature sensors 20 may be disposed in different positions within the smoking space. A plurality of temperature sensors 20 may be disposed in the longitudinal direction of the smoking article 30. Alternatively, the plurality of temperature sensor 20 may be disposed in positions opposite to each other. Here, the distances between the temperature sensors 20 may be the same or different. When the plurality of temperature sensors 20 are used, smoking progress (e.g., the degree of progress of smoking) may be more accurately monitored, and a variety of pieces of monitoring information to be described below may be obtained.

According to an embodiment of the present disclosure, starting of smoking may be detected (determined) by a temperature sensor disposed adjacent to the upstream end of the smoking material part. For example, the control part 18 may determine that smoking has started when the temperature measured by the temperature sensor is equal to or higher than the reference temperature. According to an embodiment of the present disclosure, the degree of progress of smoking (e.g., the position current of smoking (or combustion)) of the smoking article 2 may be determined by comparing temperatures measured by a plurality of temperature sensors disposed in the longitudinal direction of the smoking article.

According to an embodiment of the present disclosure, the plurality of temperature sensors 20 may be disposed in positions opposite to each other with respect to the inserted smoking article 2 or in the circumferential direction of the smoking article 2 within the smoking space (e.g., four temperature sensors 20 may be disposed at 90° intervals). In this case, the degree of tilting (shaking) of the smoking article 2 may be determined by comparing temperatures measured by the plurality of temperature sensors 20. For example, when the temperature measured by a specific temperature sensor is higher than the temperatures measured by the other temperature sensors, the control part 18 may determine that the inserted smoking article 2 is tilted in the direction of the specific temperature sensor. Alternatively, when temperatures measured by the plurality of temperature sensors 20 change to be equal to or higher than the reference temperature, the control part 18 may determine that the inserted smoking article 2 is shaking.

According to an embodiment of the present disclosure, the temperature sensor 20 having an elongated body may be disposed within the smoking space. For example, the elongated temperature sensor 20 may be disposed in the longitudinal direction of the smoking article 2. According to an embodiment of the present disclosure, the temperature sensor 20 may be configured such that a first portion of the elongated body measures the temperature of a first corresponding portion of the smoking material part of the smoking article 2 and a second portion of the elongated body measures the temperature of a second corresponding portion of the smoking material part of the smoking article 2. The temperature sensor may be specifically configured in any manner. In this case, the progress of smoking may be monitored on the basis of the temperature measured by the specific portion of the elongated body. For example, the control part 18 may determine the degree of progress of smoking of the smoking article 2 by measuring temperatures measured by respective portions of the elongated body.

According to an embodiment of the present disclosure, the temperature sensor(s) 20 may be disposed on the basis of a combination of the above-described embodiments.

The ignition part 15 may be disposed within the smoking space to ignite the smoking article 2 inserted into the smoking space. The ignition part 15 may be controlled by the control part 18 and may perform an ignition function in response to a manual operation of the user. The number, shape, disposed position, and the like of the ignition parts 15 may be variously designed and may differ depending on the embodiment.

According to an embodiment of the present disclosure, the ignition part 15 may be disposed in fixed positions. Specifically, as illustrated in FIG. 1 and the like, the ignition part 15 may be disposed to ignite the upstream end or a portion adjacent to the upstream end of the inserted smoking article 2. In this case, the structure of the sidestream smoke removing device 1 may be simplified, thereby minimizing the defect rate of manufacturing.

According to an embodiment of the present disclosure, the ignition part 15 may be designed and configured to be movable. The ignition part 15 may be specifically configured in any manner. For example, the ignition part 15 may be configured to move in the longitudinal direction by manual operation of the user or under the control of the control part 18. In an embodiment of the present disclosure, the control part 18 may move the ignition part 15 toward the upstream end of the smoking article 2 in response to the smoking article 2 being detected. In this case, the sidestream smoke removing device 1 may be universally applied to the smoking articles 2 having a variety of lengths, thereby significantly improving the usability of the sidestream smoke removing device 1.

The mesh part 17 may be disposed between the sidestream smoke processing part 16 and the back cover 13 to serve as a safety net. For example, the mesh part 17 may prevent a specific object (e.g., a fragment of the filter 16A) within the smoking space from moving toward the back cover 13.

The display part 19 may be on the outer surface of the housing 11 to display a variety pieces of information under the control of the control part 18. For example, the display part 19 may display information regarding the smoking progress, information regarding the device, smoking history information, information regarding the user, etc. Here, the information regarding the smoking progress may include information regarding the progress of smoking (e.g., all pieces of information regarding the progress of smoking, such as the degree of progress of smoking, the current position of smoking, the remaining number of puffs, a smoking time, a remaining smoking time, etc.) and puff information (e.g., all pieces of information regarding puff events, such as the number of puffs, the length of puff, the interval of puff, the strength of puff, whether or not the user is puffing, etc.), but is not limited thereto. The device may include information, such as power state, malfunction, a battery state (e.g., the state of charge of the battery, the necessity to charge, etc.), but is not limited thereto. The smoking history information may include the cumulative number of cigarettes smoked, etc., but is not limited thereto.

The display part 19 may visually display various types of information by including a visual display means, such as a light-emitting diode (LED) display. Here, a specific form of the display means may be variously modified.

The control part 18 may control the overall operation of the sidestream smoke removing device 1. For example, the control part 18 may control the operation of the ventilation fan 16B, the operation of the display part 19, and the operation of other components of the sidestream smoke removing device 1. In addition, the control part 18 may review the smoking progress of the smoking article 2. The control part 18 may determine whether or not the sidestream smoke removing device 1 is able to operate by reviewing the state of each of the components of the sidestream smoke removing device 1.

The control part 18 may be implemented as at least one processors. The processor may be implemented as an array of a plurality of logic gates, or a combination of a universal microprocessor and a memory in which a program executable by the microprocessor is stored. In addition, it will be apparent to those skilled in the art to which the present disclosure pertains that the control part 18 may be implemented as another type of hardware.

Although the control part 18 is illustrated as being positioned outside the housing 11 of the sidestream smoke removing device 1 in FIG. 1, this is only for the sake of brevity, and the control part 18 may be disposed in a variety of other positions. For example, the control part 18 may be disposed in a specific position within the housing 11.

In addition, in an embodiment of the present disclosure, the sidestream smoke removing device 1 may further include a module configured to provide audible and/or tactile outputs. For example, the sidestream smoke removing device 1 may further include a speaker, a vibration module, and the like. In this case, the control part 18 may provide various types of information to the user using the above-described module(s).

In addition, in an embodiment of the present disclosure, a cutting part may further be disposed within the smoking space. The cutting part may cut the smoking article 2 during combustion to prevent further combustion. In this manner, it is possible to provide a safe extinguishing function at a time point desired by the user and minimize a risk of burn that may occur due to the carelessness of the user (e.g., a risk of burn that may occur due to carelessness when the user extinguishes by him/herself) and a danger of fire. Here, the cutting part may be variously implemented and designed.

According to an embodiment of the present disclosure, the cutting part may be disposed in a fixed position and configured to cut a specific portion of the inserted smoking article 2. For example, the cutting part may be fixedly disposed in a position at which the filter 16A and the smoking material part are cut apart from each other. In this case, it is possible to guarantee a safe extinguishing function irrespective of the current smoking (combustion) position of the smoking article 2 and simplify the structure of the sidestream smoke removing device 1.

According to an embodiment of the present disclosure, the cutting part may be configured to be movable. For example, the cutting part may be configured to be moved by external force (e.g., a manual operation) of the user and configured to be moved under the control of the control part 18. As a more specific example, the cutting part may be automatically moved to a position adjacent to the position of current smoking (combustion) of the smoking article 2 by the control part 18.

According to an embodiment of the present disclosure, the cutting part may be operated by the user by pressing a push button provided on the exterior of the housing 11, twisting the housing 11, stretching or compressing the housing 11 in the longitudinal direction, etc. The cutting part may have a structure mechanically working together with the housing 11 so as to perform the illustrated operations, or may be implemented such that the control part 18 operates the cutting part according to the illustrated operations.

According to an embodiment of the present disclosure, the sidestream smoke removing device 1 may include one or more support portions capable of supporting a side surface of the inserted smoking article 2 so that the smoking article 2 inserted into the sidestream smoke removing device 1 may be stably supported.

### Mode for Invention

Hereinafter, the configuration and effects associated therewith according to the present disclosure will be described in more detail. However, it should be understood that the Examples are provided to more specifically describe the present disclosure, and the scope of the present disclosure is by no means limited thereto.

### Examples

### Example 1

A sidestream smoke removing device (having a 30mm×20mm oblong internal cross-section) having the shape as illustrated in FIG. 1 was fabricated, and a smoking article (a product available from KT&G) was disposed inside the sidestream smoke removing device. A plasma ion filter (i.e., a plasma ion generator available from Gwellkorea Co., Ltd., having a length 31 mm and a thickness 8.5 mm) was used and positioned further upstream than the smoking article. The plasma ion filter having a width 30 mm compliant to the transverse length of the internal cross-section of the sidestream smoke removing device was disposed such that three sides of the plasma ion filter are in contact with the internal surfaces of the sidestream smoke removing device. Two electrodes were introduced to be spaced apart 2 mm in the transverse direction and the longitudinal direction from two edges of the top surface of the plasma ion filter positioned farthest away from the smoking article in the longitudinal direction. The electrodes were positioned to protrude 5 mm in the vertical direction from the top surface of the plasma ion filter, and were in the shape of a needle. The diameter of a thickest portion of the vertical cross-section of the needle-shaped electrode was 1 mm. In addition, as a ventilation fan positioned further upstream than the filter, a fan able to realize a flow rate of 2.0 L/min in an open space without a filter was used.

### Example 2

A sidestream smoke removing device the same as that of Example 1 was fabricated, except that the plasma ion filter used brush-shaped electrodes in place of the needle-shaped electrodes. A smoking article the same as that of Example 1 was disposed inside the sidestream smoke removing device.

### Comparative Example 1

A sidestream smoke removing device the same as that of Example 1 was fabricated, except that the plasma ion filter was not applied. A smoking article the same as that of Example 1 was disposed inside the sidestream smoke removing device.

### Experimental Example

Each of smoking articles inserted into the sidestream smoke removing devices according to Examples 1 and 2 and Comparative Example 1 was ignited and was subjected to combustion for 10 minutes by driving the ventilation fan. A flow rate, a removal rate of sidestream smoke, and deodorizing performance were evaluated on the basis of discharged gas, and the results are illustrated in Table 1 below. The plasma ion filters were driven with an input voltage of 4.5 V and with a current consumption of 20 mA. The removal rates of sidestream smoke and the deodorizing performance are the results of contrast evaluation obtained from the respective sidestream smoke removing devices, on the basis of the device without a filter (Comparative Example 1). The flow rates were measured using a Mass Flow Meter 4043H available from TSI, and the removal rates of sidestream smoke were measured using a Smoking Machine (SM) 405 SV available from Cerulean. The deodorizing performance was measured by 20 expert evaluation panelists. A panelist was placed in a room having 2m² area size, a smoking article to which no sidestream smoke removing device was applied was ignited and subjected to combustion, thereby allowing the panelist to smell sidestream smoke of the smoking article. Thereafter, the nose of the panelist was ventilated. Subsequently, the panelist was placed in a room having the same area size, a smoking article to which the sidestream smoke removing device was applied was ignited, thereby allowing the panelist to smell sidestream smoke of the smoking article and to make a comparative evaluation. The evaluation was based on a total score of 7 points. When the score of the deodorizing performance was 1 to 3 points, the deodorizing performance was evaluated as "poor." When the score of the deodorizing performance was greater than 3 points and equal to or less than 5 points, the deodorizing performance was evaluated as "good." When the score of the deodorizing performance was greater than 5 points and equal to or less than 6 points, the deodorizing performance was evaluated as "very good." When the score of the deodorizing performance was greater than 6 points and equal to or less than 7 points, the deodorizing performance was evaluated as "excellent."

**[Table 1]**

| Classification | Flow Rate(L/min) | Sidestream Smoke Removal Rate (%) | Deodorizing Performance |
|---|---|---|---|
| Comp. Example 1 | 2.0 | - | - |
| Example 1 | 2.0 | 87 | Excellent |
| Example 2 | 2.0 | 93 | Excellent |

According to Table 1 above, when the plasma ion filter was used as a filter, it was possible to obtain remarkably excellent results in the removal rate of sidestream smoke and the deodorizing performance while maintaining the flow rate without. In particular, when the brush-shaped electrodes were used, the surface area capable of being exposed to sidestream smoke was increased, so that the removal rate of sidestream smoke and the deodorizing performance were able to be further improved.

Although the present invention has been described with reference to the accompanying drawings and the specific embodiments, those skilled in the art will appreciate that various modifications are possible from the above description. For example, when the described techniques are performed in a different order, and/or when some of the described components, such as the system, the architecture, device, or the circuit, are combined in a different manner and/or replaced by or substituted with other components or equivalents, suitable results may be achieved.

### Description of Reference Numerals of Drawings

1: sidestream smoke removing device
2: smoking article
11: housing
12: article inserting part
13: back cover
14: heat insulating part
15: ignition part
16: sidestream smoke processing part
16A: filter
16B: ventilation fan
17: mesh part
18: control part
19: display part
20: temperature sensor
A: vent hole
E: electrode of plasma ion filter
W: distance between electrodes

## Claims

1. A sidestream smoke removing device comprising:
a housing having a smoking space defined therein;
an article inserting part positioned on one end of the housing and having an open area through which a smoking article is inserted into the smoking space; and
a sidestream smoke processing part positioned at a distance from an upstream end of the smoking article inserted into the smoking space and configured to process sidestream smoke produced from the smoking article;
wherein the sidestream smoke processing part comprises:
a plasma ion filter configured to generate plasma ions using a high voltage electrode; and
a ventilation fan configured to allow the sidestream smoke to be discharged through the plasma ion filter.

2. The sidestream smoke removing device according to claim 1, wherein the electrode protrudes 1 mm to 10 mm with respect to a top surface of the plasma ion filter.

3. The sidestream smoke removing device according to claim 1, wherein the plasma ion filter comprises the two electrodes,
the electrodes being spaced apart from each other 25 mm or longer.

4. The sidestream smoke removing device according to claim 1, wherein the electrode is spaced apart 50 mm or longer from a downstream end of the sidestream smoke removing device.

5. The sidestream smoke removing device according to claim 2, wherein the electrode protrudes and has a pointed end.

6. The sidestream smoke removing device according to claim 5, wherein the electrode has a single column and the one or more ends provided on circumferential portions of the column.

7. The sidestream smoke removing device according to claim 2, wherein the protruding portion of the electrode has a needle shape or a brush shape.

8. The sidestream smoke removing device according to claim 1, wherein the plasma ion filter comprises:
a circuit configured to apply a voltage to the electrode; and
a plate configured to protect a top surface of the circuit,
wherein the electrode is connected to the circuit and protrudes by extending through a hole of the plate.

9. The sidestream smoke removing device according to claim 8, wherein the plate has a flow path in a top portion thereof, the flow path allowing the sidestream smoke to pass therethrough.

10. The sidestream smoke removing device according to claim 8, wherein the circuit applies a voltage of 3 V to 5 V to the electrode.

11. The sidestream smoke removing device according to claim 10, wherein a voltage on a protruding end of the electrode is boosted to between 5,000V to 7,000V.
